**Europäisches Patentamt**

**European Patent Office**

**Office européen des brevets**

(11) Veröffentlichungsnummer: **0 267 161 B1**

# EUROPÄISCHE PATENTSCHRIFT

(45) Veröffentlichungstag der Patentschrift: **05.08.92**

(21) Anmeldenummer: **87810630.1**

(22) Anmeldetag: **03.11.87**

(51) Int. Cl.⁵: **F16B 13/00**, F16B 35/04

---

(54) **Schraubvorrichtung.**

---

(30) Priorität: **03.11.86 CH 4334/86**

(43) Veröffentlichungstag der Anmeldung:
**11.05.88 Patentblatt 88/19**

(45) Bekanntmachung des Hinweises auf die
Patenterteilung:
**05.08.92 Patentblatt 92/32**

(84) Benannte Vertragsstaaten:
**AT DE FR GB NL SE**

(56) Entgegenhaltungen:
**WO-A-83/04076       CH-A- 424 382**
**CH-A- 659 294       DE-A- 3 340 666**
**DE-A- 3 513 997       DE-B- 1 962 465**
**DE-U- 8 607 932**

(73) Patentinhaber: **Spreiter, Franz**
**Höhenweg 3**
**CH-4612 Wangen(CH)**

(72) Erfinder: **Spreiter, Franz**
**Höhenweg 3**
**CH-4612 Wangen(CH)**

(74) Vertreter: **Ouehl, Horst Max, Dipl.-Ing.**
**Patentanwalt Postfach 104 Ringstrasse 7**
**CH-8274 Tägerwilen(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Schraubvorrichtung gemäss dem Oberbegriff des Patentanspruchs 1.

Die Schraubvorrichtung ermöglicht eine Abstandsveränderung zwischen zwei Bauelementen, indem mindestens eines dieser Bauelemente in Schraubgewindeeingriff mit einem der relativ zueinander verdrehbaren Teile der Schraubvorrichtung steht.

Eine durch die WO-A-83/04076 bekannte Schraubvorrichtung gemäss dem Oberbegriff des Patentanspruchs 1 hat den Nachteil, dass ihre Montage zuvor die Herstellung einer Stufenbohrung erfordert.

Der Erfindung liegt die Aufgabe zugrunde, eine Schraubvorrichtung für den genannten Zweck zu finden, deren Aufnahmebohrung für alle Anwendungsfälle auf einfache Weise mittels eines üblichen stufenlosen Bohrers herstellbar ist. Die Lösung dieser Aufgabe erfolgt erfindungsgemäss aufgrund der Merkmale des Patentanspruchs 1.

Eine erfindungsgemässe Schraubvorrichtung kann somit das für die Aufnahme der Gewindehülse erforderliche grössere Loch selbsttätig bohren, und sie lässt sich somit einfach wie eine herkömmliche Schraube montieren. Die Bereitstellung und Verwendung eines speziellen Stufenbohrers ist überflüssig.

Vorteilhafte Ausführungsformen der Erfindung sind Gegenstand der abhängigen Patentansprüche und der folgenden Beschreibung von Ausführungsbeispielen anhand der Zeichnungen zu entnehmen. Es zeigt:

Fig.1,1a    eine Befestigungsschraube der Schraubvorrichtung,

Fig.2    ein Halbschalenteil einer für die Befestigungsschraube nach Fig.1 vorgesehenen Gewindehülse,

Fig.3    das zweite Halbschalenteil zu dem Halbschalenteil nach Fig.2,

Fig.4    das Halbschalenteil nach Fig.2 in Stirnansicht,

Fig.5    das zweite Halbschalenteil nach Fig.3 in Stirnansicht,

Fig.6    eine Schraubvorrichtung im Längsschnitt mit zweiteiliger Gewindehülse,

Fig.7    eine weitere Ausführungsform eines Halbschalenteiles,

Fig.8    das hülsenseitige Ende einer Schraubvorrichtung mit einem Axialschnitt durch eine einstückige Gewindehülse,

Fig.9    eine Darstellung entsprechend Fig.8 einer weiteren Ausführungsform der Schraubvorrichtung,

Fig.10    eine Darstellung entsprechend Fig.8 oder 9 mit einer weiteren Ausführungsform der Schraubvorrichtung,

Fig.11    eine Seitenansicht des hülsenseitigen Endes einer weiteren Ausführungsform der Schraubvorrichtung,

Fig.12    einen Querschnitt durch eine Schraubvorrichtung im Eingriff mit zwei Bauelementen und

Fig.13    eine Ansicht eines für die Betätigung einer Schraubvorrichtung nach einer der Fig.1 bis 9 und 11 geeigneten Steckschlüssels.

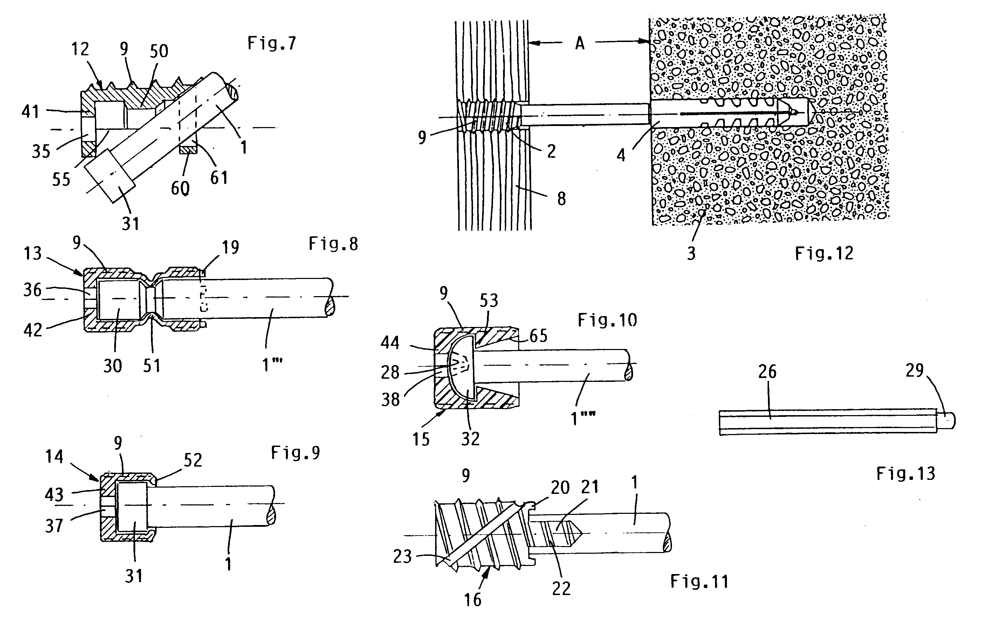

Eine Schraubvorrichtung gemäss der Erfindung hat einen Befestigungsbolzen 1 und eine Gewindehülse 2. Für den Eingriff in ein Grundelemt 3, bzw. einer Unterkonstruktion, z.B. einer Betonwand direkt oder entsprechend der Darstellung in Fig.12 über einen Spreizdübel 4 hat der Befestigungsbolzen 1,1',1'',1''' zumindest über einen Teil seiner Länge bis zu seinem zugespitzten inneren Ende 5 eine Verankerungsprofilierung 6, die entsprechend den dargestellten Ausführungsbeispielen aus einem Schraubgewinde besteht, so dass der Eingriff durch Einschrauben hergestellt wird, obwohl auch ein Einschlagen möglich wäre und entsprechend auch andere Verankerungsprofile vorgesehen sein können.

Für den Eingriff in ein relativ zu dem Grundelement 3, z.B. mit einem Abstand A zu befestigendes Bauelement 8, z.B. eine Holzplatte, eine Holzlatte, einen Balken u.s.w. ist eine zweite Verankerungsprofilierung in Form eines Aussengewindes 9 an der Gewindehülse 2, bzw. 10 bis 16 vorgesehen. Da diese Gewindehülse 2,10-16 drehbar, jedoch axial fixiert am Befestigungsbolzen 1, 1',1'',1''' gehalten ist, bewirkt das Aussengewinde 9 eine Veränderung des Abstandes A, wenn die Gewindehülse 2,10-16 allein in dem Bauelement 8 verdreht wird.

Die Gewindesteigung des Gewindes 6 des Befestigungsbolzens und diejenige 9 der Gewindehülse haben vorzugsweise die gleiche Steigung, so dass das Gewinde 9 dem durch den Befestigungsbolzen im Bauelement 8 vorgeschnittenen Gewinde folgen kann, auch wenn es einen grösseren Durchmesser hat. Dies wird ermöglicht, indem sich die Gewindehülse 10 in Einschraubrichtung verjüngt. Bei ungleicher Steigung würde sich auch eine ungewollte Aenderung des Abstandes oder eine Verspannung zwischen beiden Bauelementen 3,8 ergeben. Aufgrund der Erfindung ist es jedoch möglich, dass die Schraubvorrichtung sich selbst im zu befestigenden Bauelement 8 das Gewindeloch auf den grösseren Durchmesser schafft, der für die Gewindehülse 2,10-16 erforderlich ist, obwohl das gemeinsame Vorbohren in beiden Bauelementen 8,3 mit gleichem Durchmesser erfolgt.

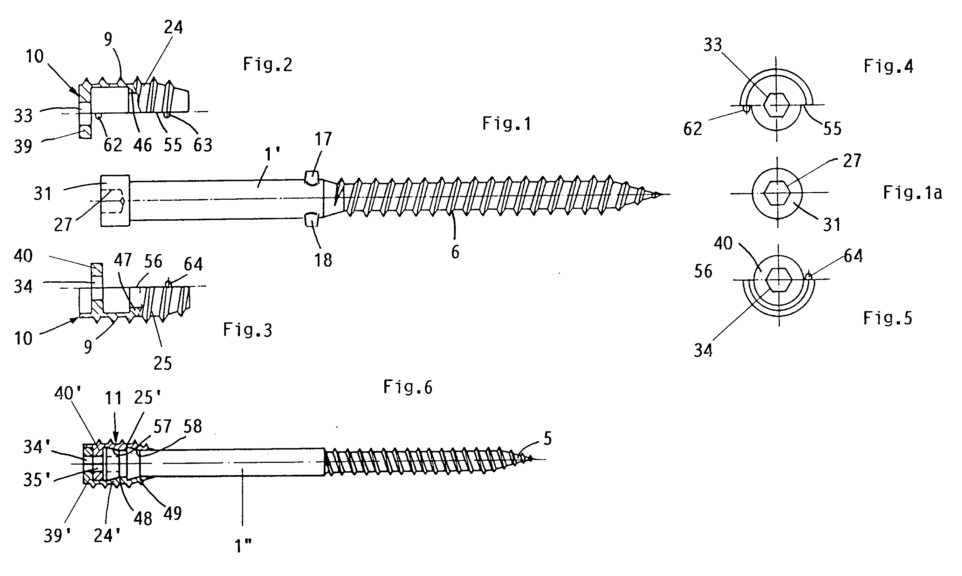

Um das Loch im zu befestigenden Bauelement 8 gegenüber dem mit gleichem Durchmesser gemeinsam vorgebohrten Loch in beiden Bauelementen 8,3 zu vergrössern, bevor sich die Gewindehülse ihr Gewinde im Bauelement 8 schneidet, können entweder am Befestigungsbolzen 1' entsprechend Fig.1 oder an der der Eindrehrichtung zugekehrten Stirnseite der Gewindehülse 13,16 fräserartige Schneidfortsätze 17,18;19-21 angeformt sein. Die Schneidfortsätze 17,18 am Befestigungsbolzen 1' sind durch zwei seitliche Materialausquetschungen geformt und angrenzend an das Verankerungsgewinde 6 angeordnet. Gemäss Fig.11 sind grössere, axialgerichtete Schneidfortsätze 21, z.B. zwei diametral gegenüberliegend, an der Gewindehülse 16 vorgesehen, die an ihrer Aussenfläche mit Gewindestücken 22 versehen sind, um das Gewinde 9 vorzuschneiden. Um das Gewindeschneiden durch die Gewindehülse weiter zu erleichtern, kann eine zum Gewinde 9 gegenläufige Spanfreinut 23 vorgesehen sein oder es werden, z.B. an den Hülsenhalbschalenteilen 24,25 nach Fig.2 und 3, in axialer Richtung zueinander versetzte Gewindestücke vorgesehen, so dass diese jeweils schneidende Stirnflächen aufweisen. Zur Schaffung von Spanfreiräumen können in der Gewindehülse 2,10-15 auch nichtdargestellte Vertiefungen oder radiale Löcher vorgesehen sein.

Die Zeichnungen zeigen mehrere Ausführungsbeispiele, wie bei für das Einbringen der Schraubvorrichtung in ein vorgebohrtes Loch oder auch in massives Holzmaterial geringem Durchmesserunterschied zwischen dem Befestigungsbolzen und der Gewindehülse, diese verdrehbar am Befestigungsbolzen gehalten sein können und dabei ein gemeinsamer oderauch einzelner Eingriff eines Steckschlüssels 26 in Eingriffsausnehmungen 27,28 des Befestigungsbolzens 1,1',1'',1''' und der Gewindehülse 2,10-16 möglich ist. Hierfür hat der Schlüssel 26 einen Distanzzapfen 29.

Erfindungsgemäss wird bei allen Ausführungsformen das äussere Ende 30 oder der Kopf 31,32 des Befestigungsbolzens bei Freilassung einer Eingriffs- und Durchgriffsöffnung 33-38 von der äusseren Stirnwand 39-44 der Gewindehülse 11-16 oder Halbschalenteile 24,25 übergriffen und ausserdem hintergreift ein radial nach innen gerichteter Innenrand 46-53 der Gewindehülse 2,10-16 dieses äussere Ende 30 oder den Kopf 31,32, so dass die Gewindehülse in axialer Richtung ohne die Verwendung zusätzlicher separater Mittel, wie z.B. eines Federringes, um ihre Achse drehbar fixiert ist, um entsprechend das Bauelement 8 axial fixiert zu halten. Wie die Zeichnungen zeigen, kann dies auf verschiedene Weise erreicht werden.

Gemäss den Ausführungsbeispielen der Fig.1 bis 7 ergibt sich der genannte Uebergriff und Hintergriff des Kopfes 31 des Befestigungsbolzens 1,1',1'' durch die Gewindehülse 10,11,12 ohne Verformung der Gewindehülse, indem diese aus zwei Halbschalenteilen 24,25 besteht, die über achsparallele Trennflächen 55,56 über dem Kopf 31 zusammengefügt werden. Da dies Zusammenfügen durch den Anwender der Schraubverbindung vorgenommen werden kann, hat dieser die Möglichkeit dem jeweiligen Bauelement optimal angepasste Halbschalenteile hiefür aus einem zur Verfügung gestellten Sortiment auszuwählen, so dass mit dem gleichen Typ einer handelsüblichen Schraube als Befestigungsbolzen 1 verschiedene Gewindehülsen 10,12 kombiniert werden können, z.B. mit Unterschieden im Durchmesser, der Hülsenlänge, der Form und Anzahl der Gewindegänge, des Materials u.s.w. Ausserdem ermöglicht die zwei- oder auch mehrschalige Ausführung der Gewindehülse 11 auch eine besondere Ausführungsform gemäss Fig.6, bei der die Gewindehülse 11 durch mindestens eine konische Innenfläche 57,58 radial aufspreizbar ist, wenn zwischen dem Befestigungsbolzen 1'' und der Gewindehülse 11, bzw. zwischen den beiden mit ihnen verbundenen Bauelementen 3, 8 Axialkräfte auftreten, so dass sich ein durch Erschütterungen gelockerter Eingriff zwischen der Gewindehülse 11 und dem Bauelement 8 wieder verspannen kann.

Die Halbschalenteile 24,25 haben beide für den genannten Uebergriff des Kopfes 31 einen Querwandteil 39,40,41, die sich in montierter Position der Gewindehülse 10-12 so übereinander legen, dass ihre Eingriffs- und Durchgriffsöffnungen 33-35 zueinander fluchten und das Drehwerkzeug 26 entsprechend die Einschraubkraft auf beide Halbschalenteile 24,25 überträgt. Gleichzeitig bewirkt der Eingriff des Drehwerkzeuges 26 in beide Halbschalenteile 24,25 eine Verbindung zwischen beiden. Beim Zusammenfügen der Halbschalenteile 24,25 über dem Kopf 31 wird dieser ausserdem durch den genannten Innenrand 46-50 der Halbschalenteile hintergriffen. Anstatt eines ununterbrochenen Innenrandes 46-50 könnten jedoch auch einzelne hintergreifende Erhebungen innen an den Halbschalenteilen vorgesehen sein.

Fig.7 zeigt eines von zwei ineinanderzufügenden Halbschalenteilen, an deren hinteren Ende schlaufenartig in einer zweiten Querwand 60 eine Halteöffnung 61 für den Befestigungsbolzen 1 vorgesehen ist, durch die dieser entsprechend der Darstellung durch eine Einhakbewegung eingefügt wird.

Zur Verbindung der Halbschalenteile 24,25 miteinander, bevor sie im Aufnahmeloch des Bauelementes 8 ohnehin zueinander zentriert werden, können an den Trennflächen 55,56 zwischen beiden Eingriffszapfen 62-64 für eine druckknopfartige Pressverbindung vorgesehen sein.

Fig.8 und 9 zeigen zwei Ausführungsformen der Erfindung, bei denen das Hintergreifen des äusseren Endes 30 oder des Kopfes 31 des Befestigungsbolzens 1,1‴ durch eine ringförmige Taillierung 51 (Fig.8) oder eine Einbördelung 52 des inneren Hülsenrandes erreicht ist. Dies erfordert bei der Herstellung der Schraubverbindung eine Metallverformung der Gewindehülse 13,14. Eine gleichartige Form der Gewindehülsen 13,14 ist jedoch auch ohne Metallverformung geeignet, wenn diese entweder durch Längsschlitze oder Verwendung eines elastisch verformbaren Kunststoffmaterials zum Herstellen der Verbindung zwischen ihr und dem Ende 30 oder dem Kopf 31 in radialer Richtung zumindest im Bereich des Innenrandes 51-53 oder entsprechender Hintergreifmittel elastisch aufweitbar ist, um sie über das hierfür aussen abgeschrägten Ende 30 oder den Kopf 32 zu pressen. Fig.10 zeigt ein entsprechendes Ausführungsbeispiel. Die Gewindehülse 15 ist dort aus Kunststoff geformt und hat nach innen eine konische Erweiterung 65, um den Kopf 32 hinter dem Innenrand 53 nach Aufweitung der Gewindehülse 15 druckknopfartig einrasten zu lassen. Nichtdargestellte Längsschlitze in der Hülsenwand können dies erleichtern.

Wie an sich durch die CH-A-424 382 bekannt, kann eine erfindunsgemässe Schraubvorrichtung am inneren Ende der Gewindehülse durch einen Bereich verlängert werden, der sich beim Einschrauben am Grundelement 3 abstützt und bei Verringerung des Abstandes A zwischen beiden Bauelementen (3,8) ausknickt, so dass eine zusätzliche Abstützung geschaffen ist.

Als Zubehör insbesondere zu der Schraubvorrichtung nach Fig.1 bis 7 empfiehlt sich ein Verschlusspropfen, um bei versenktem Eingriff der Gewindehülse das Bohrloch im Bauelement 8 zu schliessen. Dabei hat dieser Verschlusspfropfen einen Eingriffszapfen mit der Querschnittsform des Werkzeuges 26, so dass er ebenso wie bei der Verwendung desselben, durch gleichzeitigen Eingriff in beide Schalenteile 24,25, diese gegenseitig verriegelt.

Der Steckschlüssel 26 wird zur separaten Verdrehung der Gewindehülse, um den Abstand A einzustellen, mit dem Distanzzapfen 29 voran in die Durchgriffs- und Eingriffsöffnung 33-38 eingesteckt, so dass sein Sechskantprofil nicht mit der Ausnehmung 27 des Kopfes 31 des Befestigungsbolzens in Eingriff gelangt, während dieses bei Verwendung des entgegengesetzten Endes des Steckschlüssels 26 der Fall ist.

**Patentansprüche**

1. Schraubvorrichtung zur verstellbaren Befestigung, mit einem Mittel (6) für die Verankerung in einem Grundelement (3) aufweisenden Befestigungsbolzen (1,1',1", 1‴, 1″″) und einer an diesem drehbar gelagerten und axial fixierten Gewindehülse (2,10-16) für den Eingriff in ein zu befestigendes Bauelement (8), wobei die Gewindehülse (2,10-16) an ihrem äusseren Ende eine axialgerichtete Durchgriffs- und Eingriffsöffnung (33-38) für ein Werkzeug (26) aufweist, die Gewindehülse (2,10-16) mit einer Durchgriffs- und Eingriffsöffnung (33-38) aufweisenden äusseren Stirnwand (39-44) das äussere Ende (30) oder einen Kopf (31,32) des Befestigungsbolzens (1,1',1",1‴,1″″) übergreift und mit mindestens einer radial nach innen gerichteten Erhebung (46-53) hintergreift, dadurch gekennzeichnet, dass an dem Befestigungsbolzen (1') oder an der der Eindrehrichtung zugekehrten Stirnseite der Gewindehülse (13,16) mindestens ein fräserartiger Schneidfortsatz (17-21) angeformt ist.

2. Schraubvorrichtung nach Anspruch 1, dadurch gekennzeichnet, dass am äusseren Ende (30) oder dem Kopf (31,32) des Befestigungsbolzens (1,1',1",1‴,1″″) eine Ausnehmung (27,28) für den Eingriff eines Werkzeuges (26) vorgesehen ist, wobei die radial grösste Abmessung der Durchgriffs- und Eingriffsöffnung (33-38) mindestens angenähert gleich derjenigen der Ausnehmung (27,28) ist.

3. Schraubvorrichtung nach Anspruch 2, dadurch gekennzeichnet, dass die Durchgriffs- und Eingriffsöffnung (33-37) und die Ausnehmung (27) die gleiche Grösse und Querschnittsform aufweisen.

4. Schraubvorrichtung nach einem der Ansprüche 1 bis 3, dadurch gekennzeichnet, dass die Gewindehülse (10) aus mindestens zwei Schalenteilen (24,25) mit längsgerichteten Trennflächen (55,56) zusammengefügt ist, wobei eine die Durchgriffs- und Eingriffsöffnung (33-35) aufweisende Querwand (39-41) jedes Schalenteiles (24,25) diejenige des anderen überlappt und ihre Durchgriffs- und Eingriffsöffnungen (33-35) zueinander fluchten, so dass ein in sie eingesteckter Zapfen eines Verschlusspropfens sie gegenseitig verriegelt.

5. Schraubvorrichtung nach Anspruch 4, dadurch gekennzeichnet, dass in axialem Abstand zu der Querwand (41) in einer zweiten Querwand (60) eine Halteöffnung (61) vorgesehen ist, die den Befestigungsbolzen (1) umschliesst.

6. Schraubvorrichtung nach Anspruch 4 oder 5, dadurch gekennzeichnet, dass an mindestens einer der Trennflächen (55, 56) zwischen den Schalenteilen (24,25,24',25') Eingriffszapfen (62-64) für eine druckknopfartige Pressverbindung vorgesehen sind.

7. Schraubvorrichtung nach Anspruch 4, dadurch gekennzeichnet, dass die Gewindehülse (11) mindestens eine innere, an einer Erhebung des Befestigungsbolzens (1") anliegende Schrägfläche (57,58) aufweist, so dass die Gewindehülse durch Axialkräfte aufweitbar ist.

8. Schraubvorrichtung nach einem der Ansprüche 1 bis 3, dadurch gekennzeichnet, dass das Ende (30) oder der Kopf (31) des Befestigungsbolzens durch eine radialgerichtete, durch Metallverformung gebildete Einengung (51,52) der Gewindehülse (13, 14) hintergriffen ist.

## Claims

1. Screwing device for adjustable fixing, with a means (6) for anchoring in a fixing bolt (1, 1', 1", 1'", 1"") having a basic element and a threaded sleeve (2, 10-16) rotatably mounted and axially fixed thereon for engaging in a component (8) to be fixed, the threaded sleeve (2, 10-16) having on its outer end an axially directed passage and engagement opening (33-38) for a tool (26), the threaded sleeve (2, 10-16) engaging with an outer end wall (39-44) having a passage and engagement opening (33-38) over the outer end (30) or a head (31, 32) of the fixing bolt (1, 1', 1", 1'", 1"") and engaging behind the same with at least one radially inwardly directed protuberance (46-53), characterized in that at least one milling cutter-like extension (17-21) is shaped onto the fixing bolt (1') or onto the end face of the threaded sleeve (13, 16) facing the insertion direction.

2. Screwing device according to claim 1, characterized in that on the outer end (30) or the head (31, 32) of the fixing bolt (1, 1', 1", 1'", 1"") is provided a recess (27, 28) for the engagement of a tool (26), the radially largest dimension of the passage and engagement opening (33-38) being at least approximately the same as that of the recess (27, 28).

3. Screwing device according to claim 2, characterized in that the passage and engagement opening (33-37) and the recess (27) have the same size and cross-sectional shape.

4. Screwing device according to one of the claims 1 to 3, characterized in that the threaded sleeve (10) is assembled from at least two shell parts (24, 25) with longitudinally directed joint faces (55, 56), in which a transverse wall (39-41) of each shell part (24, 25) having the passage and engagement opening (33-35) overlaps that of the other and their engagement and passage openings (33-35) are aligned with one another, so that a pin of a locking plug inserted in the same knocks them against one another.

5. Screwing device according to claim 4, characterized in that axially spaced from the transverse wall (41) is provided in a second transverse wall (60) a holding opening (61), which surrounds the fixing bolt (1).

6. Screwing device according to claims 4 or 5, characterized in that on at least one of the joint faces (55, 56) between the shell parts (24, 25, 24', 25') are provided engagement pins (62-64) for a push button-like press connection.

7. Screwing device according to claim 4, characterized in that the threaded sleeve (11) has at least one inner sloping face (57, 58) engaging on a protuberance of the fixing bolt (1"), so that the threaded sleeve can be widened by axial forces.

8. Screwing device according to one of the claims 1 to 3, characterized in that the end (30) or the head (31) of the fixing bolt is engaged behind by a radially directed narrowing (51, 52) of the threaded sleeve (13, 14) formed by metal deformation.

## Revendications

1. Dispositif de vissage pour la fixation réglable, avec un boulon de fixation (1,1',1",1'",1"") présentant un moyen (6) pour l'ancrage dans un élément de base et avec une douille filetée (2, 10-16) montée à rotation et assujettie axialement dans ce boulon pour l'engagement dans un élément de construction à attacher, la douille filetée (2, 10-16) présentant à son extrémité extérieure une ouverture de passage et d'engagement (33-38) de direction axiale pour un outil (26), la douille filetée (2, 10-16) venant coiffer, par une face frontale extérieure (39-44) présentant une ouverture de passage et d'engagement (33-38), l'extrémité extérieure (30) ou une tête (31, 32) du boulon de fixation (1,1',1",1'",1"") et venant s'engager derrière celle-ci par au moins une protubérance (46-53) dirigée radialement vers l'intérieur, caractérisé en ce que sur le boulon de fixation (1') ou sur la face frontale de la douille filetée (13, 16) dirigée vers le sens de rotation de vissage est formée une protubérance de coupe (17-21) du type fraise.

2. Dispositif de vissage suivant la revendication 1, caractérisé en ce qu'à l'extrémité extérieure (30) ou dans la tête (31, 32) du boulon de fixation (1,1',1",1"',1"") est prévu un évidement (27, 28) pour l'engagement d'un outil (26), la dimension radiale maximale de l'ouverture de passage et d'engagement (33-38) étant au moins sensiblement égale à celle de l'évidement (27, 28).

3. Dispositif de vissage suivant la revendication 2, caractérisé en ce l'ouverture de passage et d'engagement (33-37) et l'évidement (27) ont les mêmes grandeuret section transversale.

4. Dispositif de vissage suivant l'une quelconque des revendications de 1 à 3, caractérisé en ce que la douille filetée (10) est constituée par la réunion, d'au moins deux parties de coquille (24,25) à surfaces de séparation (55,56) de direction longitudinale, une paroi transversale (39-41), à savoir celle qui présente l'ouverture de passage et d'engagement (33-35), de chaque partie de coquille (24,25), chevauchant la paroi transversale de l'autre partie de coquille, les ouvertures de passage et d'engagement (33-35) des deux partes de coquille étant en alignement, de telle sorte qu'un tourillon d'un bouchon d'obturation fiché dans ces ouvertures solidarise mutuellement les deux parties de coquille.

5. Dispositif de vissage suivant la revendication 4, caractérisé en ce qu'à distance axiale de la paroi transversale (41), une ouverture de support (51) est prévue dans une deuxième paroi transversale, ouverture qui entoure le boulon de fixation (1).

6. Dispositif de vissage suuivant la revendication 4 ou la revendication 5, caractérisé en ce qu'au moins sur une des surfaces de séparation (55, 56) entre les parties de coquille (24, 25, 24', 25') sont prévus des tourilllons d'engagement (62-64) pour un assemblage à pression du type bouton de pression.

7. Dispositif de vissage suivant la revendication 4, caractérisé en ce que la douille filetée (11) présente au moins une surface biseautée intérieure (57, 58) appliquée sur une protubérance du boulon de fixation (1"), de sorte que la douille filetée peut être dilatée sous l'action de forces axiales.

8. Dispositif de vissage suivant l'une quelconque des revendications de 1 à 3, caractérisé en ce que l'extrémité (30) ou la tête (31) du boulon de fixation est enserrée par l'arrière par un rétrécissement de direction axiale (51, 52) obtenu par déformation métallique de la douille filetée (13, 14).

Fig.2

Fig.1

Fig.4

Fig.1a

Fig.3

Fig.5

Fig.6

EP 0 267 161 B1

Fig.7

12  9  50

41

35

55

60  61

31

1

Fig.8

13  9  19

36

42

30  51

1'''

Fig.9

14  9  52

43

37

31

1

9  53  Fig.10

44  65

28

38

15  32

1''''

Fig.11

9  20  21  1

23

16  22

A

9  2

8

4

3  Fig.12

26  29

Fig.13

EP 0 267 161 B1